# EUROPÄISCHE PATENTSCHRIFT

(11) **EP 0 522 221 B1**
(45) Veröffentlichungstag und Bekanntmachung des Hinweises auf die Patenterteilung: **24.01.1996**
(21) Anmeldenummer: 91810533.9
(22) Anmeldetag: 08.07.1991
(51) Int. Cl.: A61C 13/30, A61C 8/00

(54) **Kunstzahn-Aufbaustruktur**
Artificial tooth upperstructure
Dent artificielle pour supra-structure

(43) Veröffentlichungstag der Anmeldung: 13.01.1993
(73) Patentinhaber: Nordin, Harald E., CH-1822 Chernex (CH)
(72) Erfinder: Nordin, Harald E., CH-1822 Chernex (CH)
(74) Vertreter: AMMANN PATENTANWAELTE AG BERN

(56) Entgegenhaltungen:
- EP-A- 0 306 429
- EP-A- 0 408 817
- CH-A- 641 947
- DE-A- 3 316 785
- US-A- 4 239 489
- US-A- 4 427 383

## Beschreibung

Die Erfindung betrifft eine Kunstzahn-Aufbaustruktur nach dem Oberbegriff des Patentanspruchs 1.

Eine solche Aufbaustruktur ist beispielsweise aus der US-A-4'239'489 bekannt, wobei der Kronenanker als aufgeschraubte Kappe ausgebildet ist, die auf dem Zahnstumpf aufliegt. Bei dieser Konstruktion ist die Verankerung des Kunstzahnes gering und es besteht die Gefahr eines Abbrechens des Stiftes bei grösserer Belastung.

Die DE-A-3 316 785 beschreibt einen zweiteiligen Wurzelstift mit einem Kopfteil, das auf einem Gewinde im Fixationsteil aufgeschraubt ist und auf dem Zahnstumpf aufliegt. Dieses Kopfteil weist an seinem oberen Ende Nuten auf und ist konisch angeschrägt. Da auch hier das als Kronenanker dienende Kopfteil auf dem Zahnstumpf aufliegt, ist die Verankerung und Stabilität des Zahnaufbaus gering.

Beim Aufbau von Kunstzähnen, bei denen von einer noch vorhandenen, gesunden oder reparierbaren Wurzel und einem aus dem Kiefer herausragenden Zahnstumpf Gebrauch gemacht werden kann, geht man jedoch in bekannter Weise und allgemein so vor, wie es in der beigefügten Figur 5 dargestellt ist. Diese Figur gibt den Stand der Technik wieder.

Um einen Kunstzahn aufzubauen, benötigt man zunächst einen im Dentin eingebrachten Zahnanker, der mit dem noch vorhandenen Zahntorso eine feste Verbindung bilden muss; andernfalls ist auch die Krone des Kunstzahns nicht fest mit dem Zahnfragment verbunden.

In Figur 5 ist nun am Beispiel eines Unterkiefermolars gezeigt, wie bisher vorgegangen wurde.

Im Kieferknochen 10 sitzt das Zahnfragment 12, dessen oberer Teil 14 über die Oberkante des Kieferknochens hinausragt. Der Wurzelkanal 16 wird nun in an sich bekannter Weise gereinigt und gegebenenfalls erweitert. Im oberen Bereich 14 des Zahnstumpfes 12 wird eine im wesentlichen zylindrische Ausnehmung 18 eingefräst. Die beiden geschilderten Arbeiten können in auch umgekehrter Reihenfolge ausgeführt werden. In die so entstandene Höhlung wird mit einem entsprechenden Werkzeug ein Kronenanker 20 eingebracht. Dieser ist in Figur 5 nur grob schematisch gezeigt, weist aber einen zylindrischen Körper 22 auf, dessen Aussendurchmesser dem Innendurchmesser der Ausnehmung 18 im Zahn entspricht und der zentralaxial mit einem Gewindedorn 24 versehen ist; dieser Dorn 24 ist zum Einschrauben in den vorbereiteten Wurzelkanal 16 bestimmt.

Es kommt nun vor und ist beinahe die Regel, dass die Achse 26 des vorbereiteten Wurzelkanals, d.h. die Achse, wie sie sich erst beim Einschrauben des Ankers 20 definiert, mit der Achse 28 der Zylinderausnehmung 18 nicht übereinstimmt, sondern mit ihr einen Winkel bildet. Da sich die Durchmesser der Ausnehmung 18 und des Ankers 20 nicht stark unterscheiden, führt der beschriebene Achsenwinkel dazu, dass beim Einschrauben des Ankers 20 in den Zahn 12 bis zum Anliegen des Ankers am Grunde der Ausnehmung der obere Randteil 14 des Zahnstumpfes abbricht, wie dies ohne weiteres aus Figur 5 ersichtlich ist.

Von diesem bekannten Stand der Technik ausgehend ist es Aufgabe der Erfindung, eine Kunstzahn-Aufbaustruktur anzugeben, die im Zahnstumpf gut verankert ist, ohne ihn zu schädigen, und bei der das Risiko eines Bruches stark vermindert ist.

Diese Aufgabe wird durch die Aufbaustruktur nach dem Kennzeichen des Patentanspruchs 1 gelöst, wobei besondere Merkmale von Ausführungsformen in abhängigen Ansprüchen definiert sind. Neben den Vorteilen, die zunächst sofort ersichtlich sind, ist zu erwähnen, dass der Aufbau des Kunstzahns einfacher und schneller zu bewirken ist. Es ergibt sich zudem eine bequeme Anpassung an den jeweils vorliegenden Fall, da der Wurzelanker an die Grösse des aufzubauenden Kunstzahns angepasst wird und eine Lagerhaltung von Wurzelankern der unterschiedlichsten Längen wegfällt.

Die Erfindung soll nun anhand von Ausführungsbeispielen näher erläutert werden. Es wird im folgenden Bezug auf die Zeichnung genommen, worin darstellen:
Figur 1 den Längsschnitt eines Zahnstumpfes mit eingedrehtem Wurzelanker,
Figur 2 den gleichen Gegenstand wie Figur 1 beim Fräsen der Hülsenhöhlung, wobei der Zahnstumpf nur teilgeschnitten ist,
Figur 3 den fertigen Kunstzahn in gleicher Darstellung wie Figur 2,
Figur 4 einen Querschnitt in der Ebene IV - IV in Figur 3, und
Figur 5 den Längsschnitt eines Zahnstumpfes mit Kronenanker nach dem Stand der Technik.

Die folgende Beschreibung beruht auf dem Beispiel von Zähnen im Unterkiefer und kann vom Fachmann ohne weiteres auf den Fall von Oberkieferzähnen übertragen werden. Sollten daher im folgenden Ausdrücke wie "unten", "oben" und dgl. verwendet werden, so sind sie im Falle des Oberkiefers umgekehrt lautend zu verstehen.

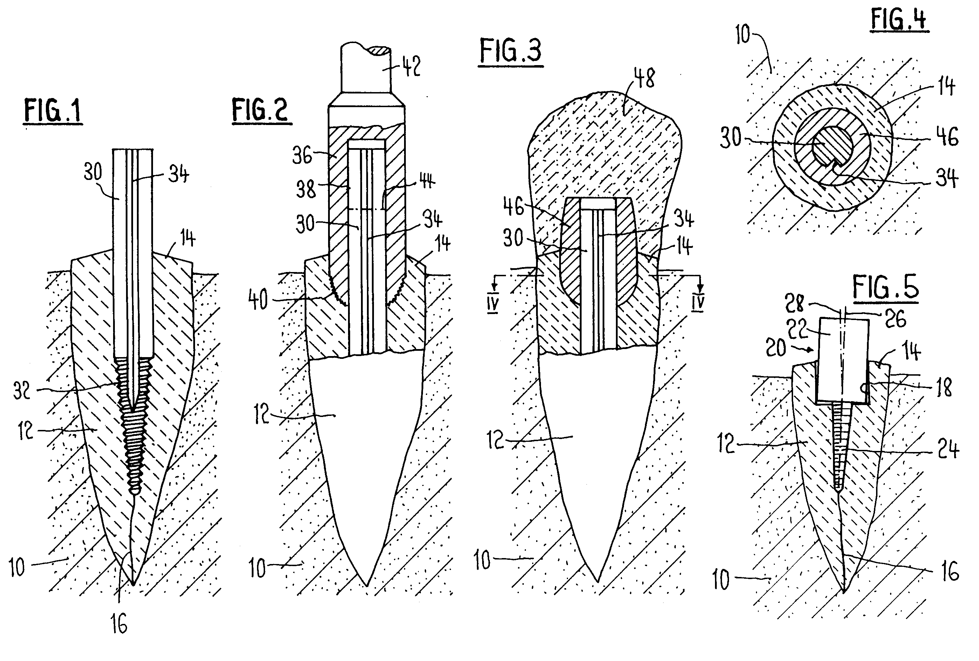

In Figur 1 ist ein Zahnstumpf 12 im Kieferknochen 10 dargestellt. In seinen Wurzelkanal 16 ist ein Wurzelstift 30 eingedreht; dieser besitzt an der Spitze einen konischen Bohrgewindeteil 32 und hat im übrigen Zylinderform; mindestens eine keilförmige Längsnut 34 dient zunächst zur Eliminierung von ausgebohrtem Dentin. Es ist nicht erforderlich, zuvor eine passende Wurzelbohrung anzubringen.

Nach Eindrehen des Wurzelstiftes 30 in den Wurzelkanal 16 wird ein Kranzbohrer 36 (Figur 2) appliziert. Dieser ist hülsenförmig ausgebildet; seine Innenbohrung 38 ist zylindrisch und passt auf und über den Wurzelstift 30, der daher als Führungselement wirkt. Der gekrümmte Bohrkranz 40 sitzt vorn an der Bohrhülse 36; oben endet der Kranzbohrer 36 in einem Befestigungsstift 42.

Der Kranzbohrer erzeugt eine zum Wurzelstift 30 genau konzentrische und symmetrische Ausnehmung mit gekrümmtem Boden. Nach Abziehen des Kranzbohrers 36 wird der Wurzelstift auf passende Länge gekürzt, z.B. gemäss der Trennlinie 44.

Nun kann der eigentliche Kronenanker 46 auf den oberen, freigebliebenen Teil des Wurzelstiftes 30 aufgesetzt werden. (Figur 3). Er dient insbesondere zur Vergrösserung der Bindungsfläche mit der Zahnkrone und zur Verbesserung der Bindekraft und besteht bevorzugt aus einem Kunststoff, insbesondere einem faserverstärkenden Komposit-Kunststoff. Wenn ein härtbarer Kunststoff verwendet wird, so erreicht man eine äusserst solide Verbindung mit dem Dentin und dem Wurzelstift. Man kann den Anker 46 auch einzementieren, einkleben, einschrumpfen usw., je nach den jeweiligen Erfordernissen. Infolge der Längsnut 34, in die das Material des Kronenankers 46 eintritt (Figur 4), wird eine drehfeste Anordnung erzielt.

Als letzter Schritt, gegebenenfalls nach Anschleifen oder asymmetrischer Bearbeitung des Kronenankers 46, wird das Material der Krone 48 aufgebracht (Figur 3), die Krone geformt, gehärtet, angepasst (Kauflächen) und poliert. Damit ist der Kunstzahn fertiggestellt. Das Material der Krone ist wie üblich Keramik oder ein geeigneter Kunststoff. Sie kann auch eine Kappe erhalten. Dieser letzte Schritt ist dem Fachmann bekannt.

Der Erfindungsgegenstand kann im Rahmen des in den Ansprüchen Definierten abgewandelt und ergänzt werden. Beispielsweise kann das Bohrgewinde 32 des Wurzelstiftes 30 auch ein Teilgewinde sein; der Schaft des Wurzelstiftes kann an seiner Oberfläche aufgerauht oder mit einem Belag versehen sein, der die bakteriendichte Anlage an das Dentin bewirkt. Die Form der Zahnausnehmung und damit des Bohrkranzes 40 kann fast beliebig gewählt werden. Bevorzugt besteht der Wurzelstift 30 zumindest an seinen Aussenflächen, insbesondere/oder vollständig aus Titan. Auch ist es üblich und zuweilen bevorzugt, dass der Wurzelstift 30 mehr als eine Längsnut aufweist, beispielsweise zwei, drei oder vier. Dabei kann die eine bzw. die mehrfach vorhandene Längsnut auch bis zum unteren Ende des Bohrgewindes laufen. Dies bedeutet, dass eine Ausbildung erreicht ist, wie sie von Metall-Gewindebohrern bzw. aus der Knochenchirurgie bekannt ist.

Die Kronenanker kann im oberen, über den Zahnstumpf hinausragenden Bereich Ausnehmungen, Schlitze und andere Oberflächenelemente, z.B. auch Rippen, aufweisen, die eine rotationssichere und überhaupt festere Verbindung mit dem Material der Krone gewährleisten. Diese Ausführungsform ist bevorzugt und ebenfalls eine solche, bei der sich der Kronenanker 46 nach oben verjüngt, wie es in Figur 3 angedeutet ist.

## Patentansprüche

1. Kunstzahn-Aufbaustruktur, enthaltend einen in einen Zahnwurzelkanal (16) einschraubbaren Wurzelstift (30) und einen zur Aufnahme und Befestigung der Zahnkrone (48) dienenden Kronenanker (46), wobei der Wurzelstift (30) als Bohrstift mit einem unteren Bohrgewindeteil (32) sowie einer axial an der Stiftaussenseite verlaufenden Längsnut (34) ausgeführt ist, dadurch gekennzeichnet, daß der Wurzelstift (30) einen zylindrischen, gewindefreien Oberteil aufweist, an dem ein hülsenförmiger Kranzbohrer (36) geführt ist, dessen Innendurchmesser dem Aussendurchmesser des gewindefreien Oberteils des Wurzelstiftes entspricht und einen frontalen Fräskranz (40) zum Ausarbeiten einer zum Wurzelstift (39) konzentrischen Ausnehmung im Zahnstumpf aufweist, und dass der Kronenanker (46) die Form einer den Wurzelstift (30) konzentrisch umgebenden, mit ihrem Unterbereich in die konzentrische Ausnehmung passenden Hülse aufweist.

2. Kunstzahn-Aufbaustruktur nach Anspruch 1, dadurch gekennzeichnet, dass der Wurzelstift (30) mindestens an seinen Oberflächen aus Titan besteht.

3. Kunstzahn-Aufbaustruktur nach Anspruch 1 oder 2, dadurch gekennzeichnet, dass der Kronenanker (46) aus Kunststoff besteht, insbesondere einem faserverstärkten Komposit-Kunststoff.

4. Kunstzahn-Aufbaustruktur nach Anspruch 1, dadurch gekennzeichnet, dass der Wurzelstift (30) Ueberlänge besitzt und nach Einschrauben in den Wurzelkanal und Bohren der Zahnausnehmung auf eine Länge verkürzbar ist, die kleiner ist als die Höhe des Kronenankers (46).

5. Kunstzahn-Aufbaustruktur nach einem der vorstehenden Ansprüche, dadurch gekennzeichnet, dass der Kronenanker (46) an seinem Bereich, der über die Ausnehmung im Zahnstumpf hinausragt, nach oben verjüngt ist.

6. Kunstzahn-Aufbaustruktur nach einem der vorstehenden Ansprüche, dadurch gekennzeichnet, dass der Kronenanker (46) an seiner Aussenfläche Vertiefungen oder Erhöhungen, insbesondere Schlitze, zwecks festerer Verbindung mit der Zahnkrone (48) aufweist.

7. Kunstzahn-Aufbaustruktur nach Anspruch 3, dadurch gekennzeichnet, dass der Kronenanker (46) aus einem Material gefertigt ist, der das Aufschrumpfen auf den verkürzten Wurzelstift (30) erlaubt.

## Claims

1. Artificial tooth construction structure, comprising a root post (30) screwable into a tooth root canal (16), and a crown anchor (46) for receiving and fastening the tooth crown (48), the root post (30) being constructed as a boring pin having a lower screw tap portion (32) and a longitudinal groove (34) running axially along the outside of the pin, characterised in that the root post (30) comprises a cylindrical, non-threaded upper portion which guides a sleeve-like crown cutter (36) whose inner diameter corresponds to the outer diameter of the thread-free upper portion of the root post and which comprises a frontal cutter crown (40) for relieving a recess in the tooth stump which is concentric to the root post (30), and that the crown anchor (46) has the shape of a sleeve concentrically surrounding the root post (30), the lower portion of said sleeve fitting into said concentric recess.

2. Artificial tooth construction structure according to claim 1, characterised in that the root post (30) is of titanium, at least on its surfaces.

3. Artificial tooth construction structure according to claim 1 or 2, characterised in that the crown anchor (46) is made of synthetic material, especially of a fibre reinforced composite synthetic material.

4. Artificial tooth construction structure according to claim 1, characterised in that the root post (30) has an overlength and can be cut after its screwing into the root channel and boring of the tooth recess to a length which is shorter than the height of the crown anchor (46).

5. Artificial tooth construction structure according to any one of the preceding claims, characterised in that the portion of the crown anchor (46) which protrudes over the recess into the tooth stump, is tapered upwardly.

6. Artificial tooth construction structure according to any one of the preceding claims, characterised in that the crown anchor (46) comprises depressions or elevations, especially slots, at its outer surface in order to achieve a stronger connection with the tooth crown (48).

7. Artificial tooth construction structure according to claim 3, characterised in that the crown anchor (46) is made of a material allowing its shrinking on the shortened root post (30).

## Revendications

1. Structure de construction de dent artificielle, comprenant une tige radiculaire (30) pouvant être vissée dans un canal radiculaire (16), et un ancre de couronne (46) servant à recevoir et à fixer la couronne dentaire (48), la tige radiculaire (30) étant exécutée comme tige de taraudage comportant une partie inférieure de foret taraudeur (32) ainsi qu'une rainure longitudinale (34) disposée axialement à l'extérieur de la tige, caractérisée en ce que la tige radiculaire (30) comporte une partie supérieure cylindrique sans filetage apte à guider un perçoir à couronne (36) sous forme de douille dont le diamètre intérieur correspond au diamètre extérieur de la partie supérieure sans filetage de la tige radiculaire et qui comporte une couronne de fraisage frontale (40) pour fraiser un évidement concentrique avec la tige radiculaire (30) dans le chicot, et que l'ancre de couronne (46) présente la forme d'une douille concentriquement entourant la tige radiculaire (30) et dont la partie inférieure est s'adapte dans l'évidement concentrique.

2. Structure de construction de dent artificielle selon la revendication 1, caractérisée en ce que la tige radiculaire (30) est en titane, au moins sur ses surfaces.

3. Structure de construction de dent artificielle selon la revendication 1 ou 2, caractérisée en ce que l'ancre de couronne (46) est en matière synthétique, en particulier en une matière synthétique composite renforcée de fibres.

4. Structure de construction de dent artificielle selon la revendication 1, caractérisée en ce que la tige radiculaire (30) présente une surlongueur et peut être raccourcie, après vissage dans le canal radiculaire et forage de l'évidement du chicot, à une longueur qui est plus petite que la hauteur de l'ancre de couronne.

5. Structure de construction de dent artificielle selon l'une des revendications précédentes, caractérisée en ce que la partie de l'ancre de couronne (46) qui dépasse l'évidement dans le chicot est effilée vers le haut.

6. Structure de construction de dent artificielle selon l'une des revendications précédentes, caractérisée en ce que la surface extérieure de l'ancre de couronne (46) comporte des dépressions ou des élévations, en particulier des fentes, afin de rendre plus solide la connexion avec la couronne dentaire (48).

7. Structure de construction de dent artificielle selon la revendication 3, caractérisée en ce que l'ancre de couronne (46) est fabriqué à partir d'un matériau permettant la fixation par rétrécissement sur la tige radiculaire raccourcie (30).
